# EUROPEAN PATENT SPECIFICATION

(11) **EP 4 421 389 B1**
(45) Date of publication and mention of the grant of the patent: **29.10.2025**
(21) Application number: 24160046.9
(22) Date of filing: 27.02.2024
(51) Int. Cl.: F23R 3/14, F23R 3/28

(54) **FUEL INJECTOR AIR SWIRLER STRUCTURE WITH CANTED FLOW GUIDE SURFACE**
LUFTVERWIRBLERSTRUKTUR FÜR KRAFTSTOFFINJEKTOR MIT GENEIGTER STRÖMUNGSFÜHRUNGSFLÄCHE
STRUCTURE DE TURBULENCE D'AIR D'INJECTEUR DE CARBURANT AVEC SURFACE DE GUIDAGE D'ÉCOULEMENT INCLINÉE

(30) Priority: 27.02.2023 US 202318114691
(43) Date of publication of application: 28.08.2024
(73) Proprietor: RTX Corporation, Farmington, CT 06032 (US)
(72) Inventor: SEN, Baris A., Glastonbury, 06073 (US); JUSTICE, Andrew W., Tolland, 06084 (US); KRAMER, Stephen K., Cromwell, 06416 (US); DILLARD, Gary J., Gainsville, 32608 (US)
(74) Representative: Dehns

(56) References cited:
- US-A1- 2006 130 483
- US-A1- 2017 009 995
- US-A1- 2020 248 903
- US-A1- 2022 412 550
- US-B2- 11 346 557
- DATABASE WPI Week 201556, Derwent World Patents Index; AN 2015-45979B, XP002811731

## Description

### BACKGROUND OF THE INVENTION

### 1. Technical Field

This invention relates generally to a gas turbine engine and, more particularly, to a fuel injector assembly for the gas turbine engine.

### 2. Background Information

Various types and configurations of fuel injector assemblies are known in the art. Some of these known fuel injector assemblies include an air swirler mated with a fuel injector nozzle. While these known fuel injector assemblies have various advantages, there is still room in the art for improvement.

US 2020/248903 A1 relates to a gas turbine engine swirler that includes a tubular body having a forward face, an aft end, and a throat. A plurality of primary swirl vanes are positioned between the aft end and the forward face. A plurality of secondary swirl vanes are positioned between the primary swirl vanes and the aft end. The plurality of primary swirl vanes and the plurality of secondary swirl vanes are configured such that the throat is fluidly connected to a plenum that is positioned outside of the tubular body. A tubular ferrule is positioned such that it joins the body at the forward face thereof. Each of the primary swirl vanes extend radially inwardly to a vane lip. The secondary swirl vanes extend radially inwardly for swirling air therefrom. The body also includes a tubular venturi that extends aft from between the primary swirl vanes and the secondary swirl vanes for radially separating air swirled therefrom. The primary swirl vanes are configured to swirl air along a passageway and through an outlet that is oriented axially aft such that the air has aft momentum.

US 2017/009995 A1 discloses an assembly for a turbine engine according to the preamble of claim 1.

### SUMMARY OF THE INVENTION

According to the invention, an assembly is provided as claimed in claim 1.

Some embodiments of the invention are claimed in the dependent claims.

The present invention may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side cutaway illustration of a geared turbine engine.
FIG. 2 is a partial side sectional illustration of a combustor with a fuel injector assembly.
FIG. 3 is a partial side sectional illustration of the fuel injector assembly.
FIG. 4 is a partial side sectional illustration of the fuel injector assembly at an interface between a nozzle guide and a swirler wall.
FIG. 5 is a partial side sectional illustration of the fuel injector assembly at an interface between the nozzle guide and another swirler wall.
FIG. 6 is a cross-sectional illustration of a radial air swirler.
FIGS. 7A-C are partial schematic illustrations of fuel injector nozzles injecting fuel along various trajectories.
FIG. 8 is a partial side sectional illustration of the fuel injector assembly configured with one or more additional air swirlers.

### DETAILED DESCRIPTION

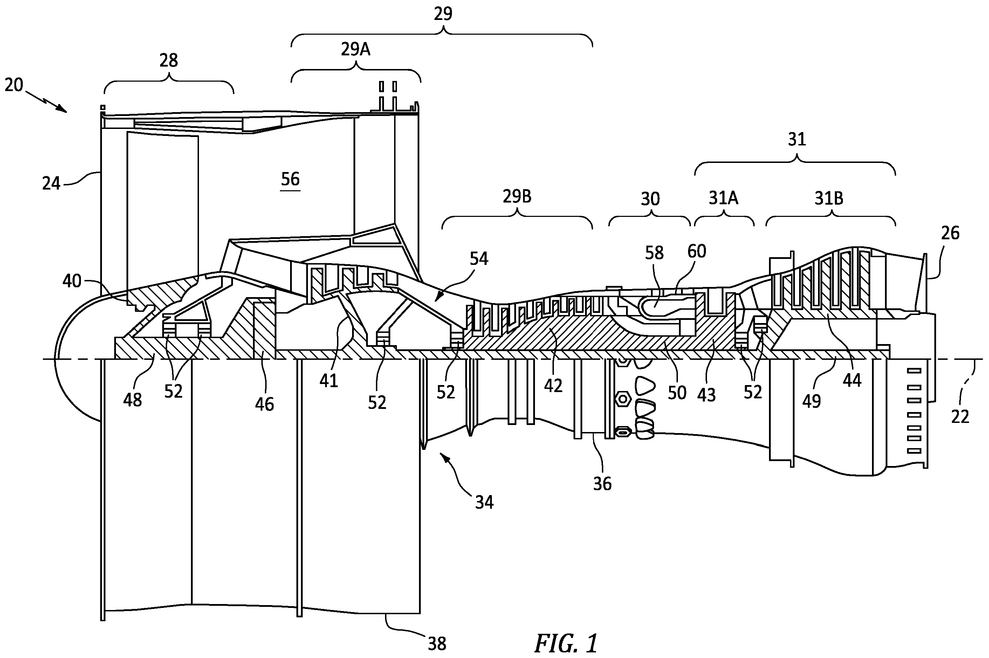

FIG. 1 is a side cutaway illustration of a geared gas turbine engine 20. This gas turbine engine 20 extends along an axial centerline 22 between an upstream airflow inlet 24 and a downstream airflow exhaust 26. The gas turbine engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B.

The engine sections 28-31B are arranged sequentially along the axial centerline 22 within an engine housing 34. This engine housing 34 includes an inner case 36 (e.g., a core case) and an outer case 38 (e.g., a fan case). The inner case 36 may house one or more of the engine sections 29A, 29B, 30, 31A and 31B; e.g., a core of the gas turbine engine 20. The outer case 38 may house at least the fan section 28.

Each of the engine sections 28, 29A, 29B, 31A and 31B includes a respective bladed rotor 40-44. Each of these bladed rotors 40-44 includes a plurality of rotor blades arranged circumferentially around and connected to one or more respective rotor disks and/or hubs. The rotor blades, for example, may be formed integral with or mechanically fastened, welded, brazed, adhered and/or otherwise attached to the respective rotor disk(s) and/or the respective hub(s).

The fan rotor 40 is connected to a geartrain 46, for example, through a fan shaft 48. The geartrain 46 and the LPC rotor 41 are connected to and driven by the LPT rotor 44 through a low speed shaft 49. The HPC rotor 42 is connected to and driven by the HPT rotor 43 through a high speed shaft 50. The engine shafts 48-50 are rotatably supported by a plurality of bearings 52; e.g., rolling element and/or thrust bearings. Each of these bearings 52 is connected to the engine housing 34 by at least one stationary structure such as, for example, an annular support strut.

During engine operation, air enters the gas turbine engine 20 through the airflow inlet 24. This air is directed through the fan section 28 and into a core flowpath 54 and a bypass flowpath 56. The core flowpath 54 extends sequentially through the engine sections 29A-31B; e.g., the engine core. The air within the core flowpath 54 may be referred to as "core air". The bypass flowpath 56 extends through a bypass duct, and bypasses the engine core. The air within the bypass flowpath 56 may be referred to as "bypass air".

The core air is compressed by the LPC rotor 41 and the HPC rotor 42 and directed into a (e.g., annular) combustion chamber 58 of a (e.g., annular) combustor 60 in the combustor section 30. Fuel is injected into the combustion chamber 58 and mixed with the compressed core air to provide a fuel-air mixture. This fuel-air mixture is ignited and combustion products thereof flow through and sequentially cause the HPT rotor 43 and the LPT rotor 44 to rotate. The rotation of the HPT rotor 43 and the LPT rotor 44 respectively drive rotation of the HPC rotor 42 and the LPC rotor 41 and, thus, compression of the air received from an inlet to the core flowpath 54. The rotation of the LPT rotor 44 also drives rotation of the fan rotor 40, which propels bypass air through and out of the bypass flowpath 56. The propulsion of the bypass air may account for a majority of thrust generated by the gas turbine engine 20.

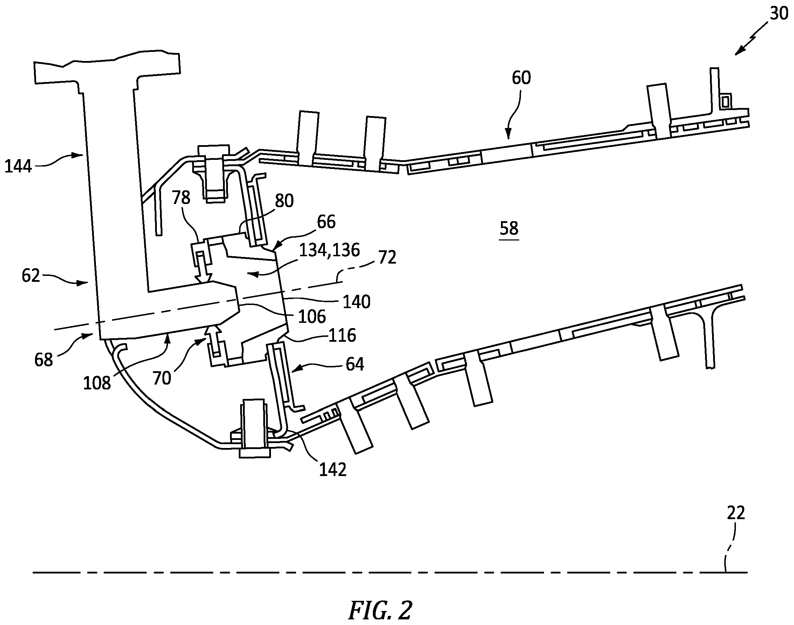

Referring to FIG. 2, the combustor section 30 includes a plurality of fuel injector assemblies 62 (one visible in FIG. 2) arranged circumferentially about the axial centerline 22 in a circular array. The fuel injector assemblies 62 are mounted to a (e.g., annular) bulkhead 64 of the combustor 60. The fuel injector assemblies 62 are configured to direct a mixture of fuel and compressed air into the combustion chamber 58 for combustion. Each fuel injector assembly 62 of FIG. 2 includes an air swirler structure 66 and a fuel injector 68. The fuel injector assembly 62 also includes a nozzle guide 70 (e.g., a guide plate, a slider, a nozzle mount, etc.) coupling the fuel injector 68 to the air swirler structure 66.

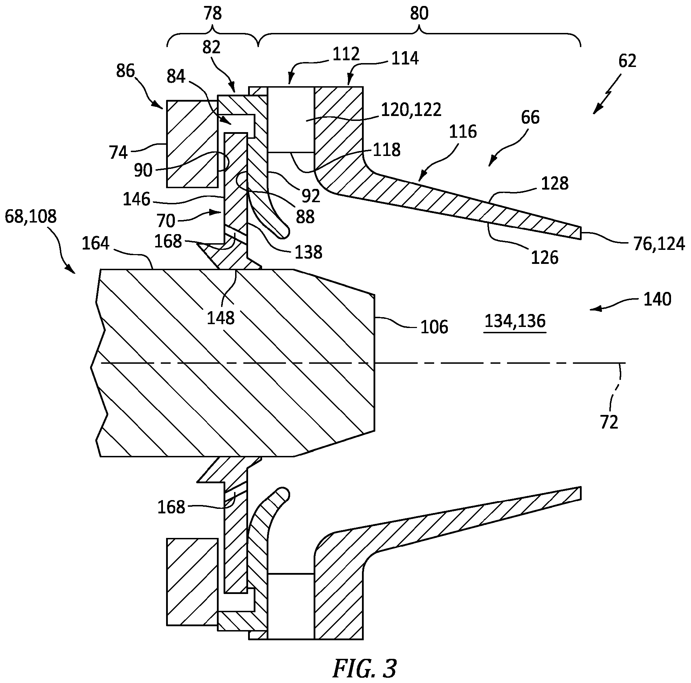

Referring to FIG. 3, the air swirler structure 66 extends circumferentially around an axis 72 (e.g., a centerline of the air swirler structure 66) providing the air swirler structure 66 with a full-hoop body. The air swirler structure 66 extends axially along the axis 72 from an upstream end 74 of the air swirler structure 66 to a downstream end 76 of the air swirler structure 66. The air swirler structure 66 of FIG. 3 includes a base section 78 and a swirler section 80.

The base section 78 is disposed at (e.g., on, adjacent or proximate) the structure upstream end 74. This base section 78 may be configured as or otherwise include a first swirler wall 82; e.g., an annular upstream swirler wall. The base section 78 may also be configured to form a receptacle 84 (e.g., a slot, a channel, etc.) for receiving the nozzle guide 70 at the structure upstream end 74. The base section 78 of FIG. 3, for example, also includes a mounting plate 86 axially abutted against and attached (e.g., mechanically fastened and/or bonded) to the first swirler wall 82. The receptacle 84 is formed at an inner periphery of the base section 78, axially between a (e.g., annular) back surface 88 of the first swirler wall 82 and a (e.g., annular) back surface 90 of the mounting plate 86.

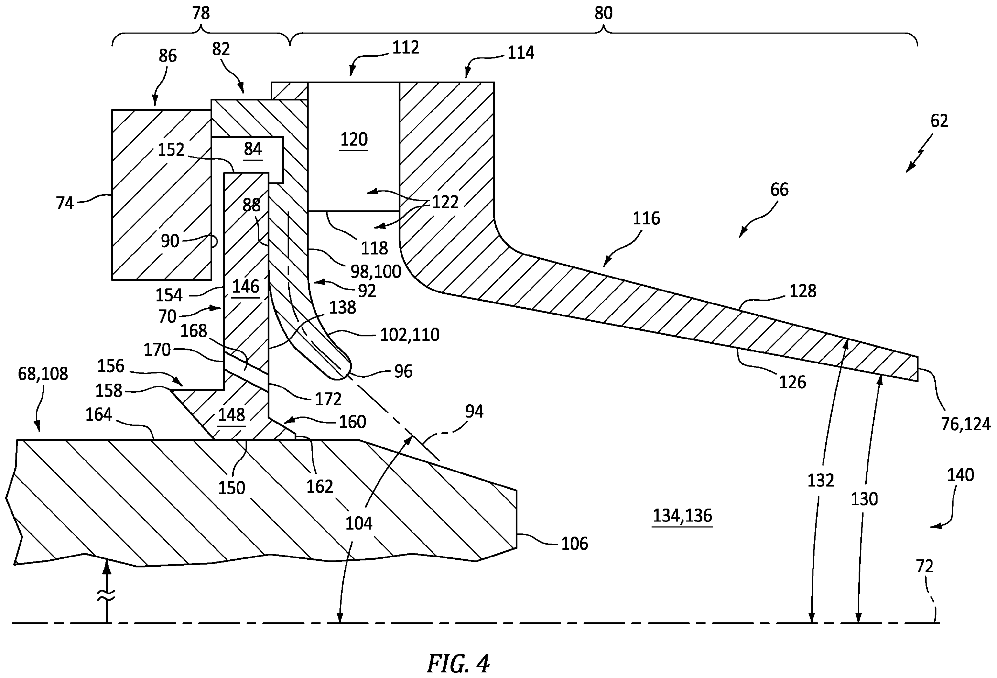

Referring to FIG. 4, the first swirler wall 82 has a thickness that extends laterally between and to the wall back surface 88 and a front flow guide surface 92 of the first swirler wall 82. The first swirler wall 82 and its surfaces 88 and 92 project longitudinally along a longitudinal centerline 94 (e.g., a centerline of a side section of the first swirler wall 82; e.g., section of FIG. 4) in a generally radial inward direction towards the axis 72 to a distal inner end 96 of the first swirler wall 82.

At least a portion or an entirety of the longitudinal centerline 94 along a radial outer portion 98 of the first swirler wall 82 may follow a straight trajectory. An outer portion 100 of the flow guide surface 92 may have a flat and planar geometry. This outer portion 100 of the flow guide surface 92 is perpendicular to the axis 72 In an embodiment not covered by the claims, it is contemplated, however, the outer portion 100 of the flow guide surface 92 may alternatively be angularly offset from the axis 72 by an acute angle equal to or greater than, for example, eighty or eighty-five degrees (80-85°). The radial outer portion 98 of the first swirler wall 82 of FIG. 4 and the wall back surface 88 may form an axial peripheral side of the receptacle 84.

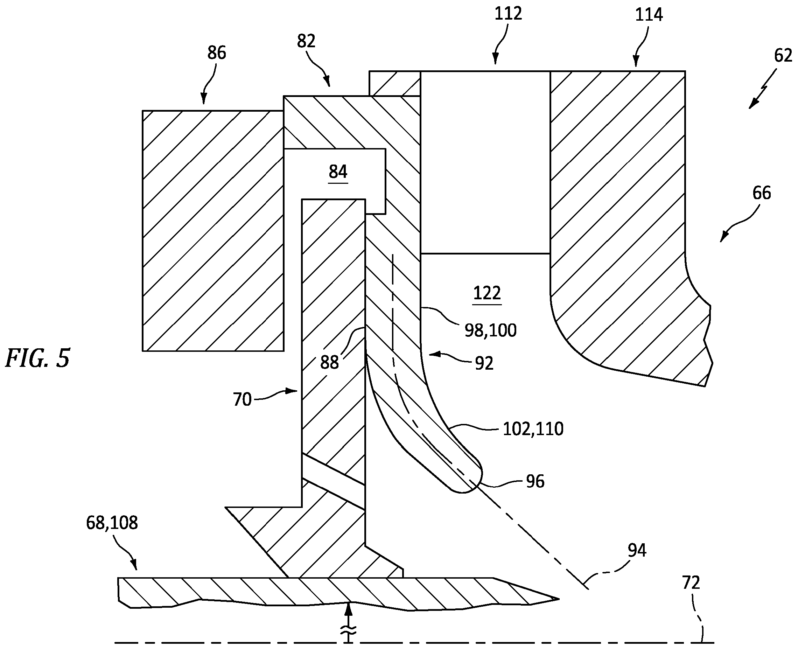

At least a portion or an entirety of the longitudinal centerline 94 along a radial inner portion 102 of the first swirler wall 82 may follow a curved (e.g., arcuate, splined, etc.) trajectory. It is contemplated, however, at least a portion or the entirety of the longitudinal centerline 94 along the radial inner portion 102 of the first swirler wall 82 may alternatively follow a straight trajectory that is canted relative to the longitudinal centerline 94 along the radial outer portion 98 of the first swirler wall 82; e.g., see FIG. 5. The longitudinal centerline 94 along the radial inner portion 102 of the first swirler wall 82 of FIG. 4 is angularly offset from the axis 72 by a non-zero acute angle 104; e.g., between fifteen degrees (15°) and sixty degrees (60°). Thus, a trajectory of the longitudinal centerline 94 along the radial inner portion 102 includes a radial (e.g., inward) component and an axial (e.g., downstream, aft) component. The angle 104 is selected such that the trajectory of the longitudinal centerline 94 at (or about) the wall inner end 96 extends towards (e.g., points to or at or about) a tip 106 of an injector nozzle 108. An inner portion 110 of the flow guide surface 92 may have a sloped, canted and/or otherwise tapered geometry; e.g., a frustoconical geometry. At least a portion or an entirety of this tapered geometry may follow a curved trajectory (or a straight trajectory; e.g., see FIG. 5) when viewed, for example, in a reference plane parallel with (e.g., including) the axis 72 and/or the longitudinal centerline 94. With this arrangement, the radial inner portion 102 of the first swirler wall 82 and its inner portion 110 of the flow guide surface 92 is configured as an air flow guide.

The swirler section 80 includes an air swirler 112 and a second swirler wall 114; e.g., an annular downstream swirler wall. The swirler section 80 of FIG. 4 also includes a swirler guide wall 116; e.g., a tubular funnel wall.

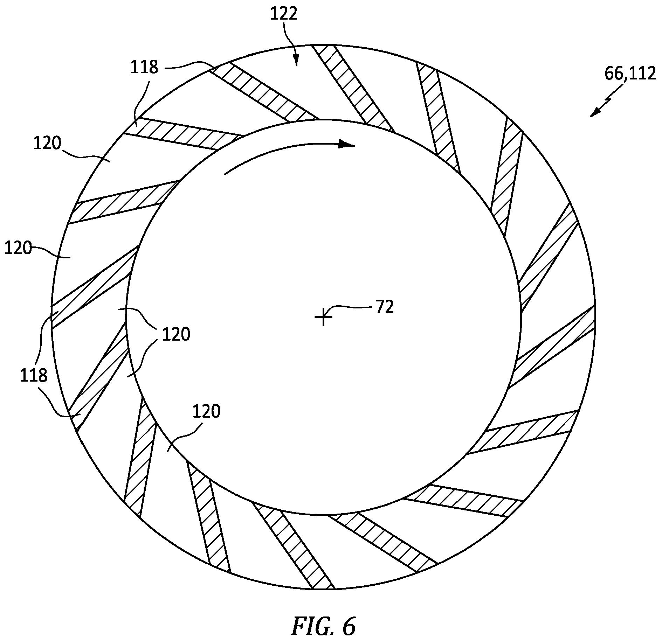

The air swirler 112 may be configured as a radial air swirler. The air swirler 112 of FIG. 4, for example, is arranged axially between and is connected to the first swirler wall 82 and the second swirler wall 114. The air swirler 112 of includes a plurality of air swirler vanes 118; see also FIG. 6. Each of these air swirler vanes 118 extends axially between and is connected to the first swirler wall 82 and its radial outer portion 98 and the second swirler wall 114. Referring to FIG. 6, the air swirler vanes 118 are arranged circumferentially about the axis 72 in a circular array. Each of the air swirler vanes 118 is circumferentially separated from each circumferentially neighboring (e.g., adjacent) air swirler vane 118 by a respective air swirler channel 120; e.g., an air gap. Each air swirler channel 120 extends circumferentially between and to a respective circumferentially neighboring pair of the air swirler vanes 118. Each air swirler channel 120 of FIG. 4 extends axially between and to the first swirler wall 82 and its radial outer portion 98 and the second swirler wall 114. With this arrangement, the air swirler channels 120 of FIGS. 4 and 6 collectively form at least a portion of an air swirler passage 122 radially through the air swirler 112, axially between the swirler walls 82 and 114. The air swirler vanes 118 / the air swirler channels 120 are configured such that air passing through and out of the air swirler passage 122 is directed in a first circumferential direction (e.g., a clockwise direction, or alternatively a counterclockwise direction) about the axis 72. In other words, the air swirler vanes 118 / the air swirler channels 120 are operable to circumferentially swirl the air passing through the air swirler 112 in the first circumferential direction.

Referring to FIG. 4, the swirler guide wall 116 is disposed at the structure downstream end 76. The swirler guide wall 116 of FIG. 4, for example, is connected to (and cantilevered from) the second swirler wall 114 at an inner end of the air swirler 112. This swirler guide wall 116 projects out from the second swirler wall 114 and extends axially along the axis 72 to a (e.g., downstream) distal end 124 of the swirler guide wall 116 at the structure downstream end 76. As the swirler guide wall 116 extends towards (e.g., to) the structure downstream end 76, the swirler guide wall 116 may (e.g., continuously or incrementally) radially taper inwards towards the axis 72. The swirler guide wall 116 may thereby have a tubular frustoconical geometry with frustoconical inner and/or outer surfaces 126 and 128. Each of these guide wall surfaces 126, 128 is angularly offset from the axis 72 by a respective non-zero acute angle 130, 132. Each of these angles 130, 132 may be less than the angle 104. Each of the angles 130, 132 may be between ten degrees (10°) and forty-five degrees (45°). The present disclosure, however, is not limited to the foregoing exemplary arrangement.

Referring to FIG. 3, the air swirler structure 66 is further configured with a swirler inner passage 134. This inner passage 134 is formed by an inner bore 136 of the air swirler structure 66, which inner bore 136 extend axially through the air swirler structure 66 between and to the structure upstream end 74 and the structure downstream end 76. An outer peripheral boundary of an upstream portion of the inner passage 134 may be formed by and radially within the base section 78 and its first swirler wall 82. An outer peripheral boundary of a downstream portion of the inner passage 134 may be formed by and radially within the swirler section 80 and its swirler guide wall 116. The inner passage 134 of FIG. 3 extends axially within the air swirler structure 66 from (or about) a side 138 of the nozzle guide 70 to an inner swirler outlet 140 (e.g., an outlet orifice) at the structure downstream end 76.

Referring to FIG. 2, the air swirler structure 66 may be mated with the combustor bulkhead 64. The swirler guide wall 116, for example, may project axially into or through a respective port in the combustor bulkhead 64. The air swirler structure 66 may also be mounted to the combustor bulkhead 64. For example, the swirler segment 80 (e.g., the second swirler wall 114 and/or the swirler guide wall 116 of FIG. 3) may be bonded (e.g., brazed or welded) and/or otherwise connected to the combustor bulkhead 64 and, more particularly, a shell 142 of the combustor bulkhead 64. However, various other techniques are known in the art for mounting an air swirler structure to a combustor bulkhead (or various other combustor components), and the present disclosure is not limited to any particular ones thereof.

The fuel injector 68 of FIG. 2 includes a fuel injector stem 144 and the fuel injector nozzle 108. The injector stem 144 is configured to support and route fuel to the injector nozzle 108. The injector nozzle 108 is cantilevered from the injector stem 144. The injector nozzle 108 projects along the axis 72 (e.g., a centerline of the injector nozzle 108) partially into the inner bore 136 of the air swirler structure 66. The nozzle tip 106 is thereby disposed within the inner passage 134. Here, the nozzle tip 106 is axially spaced from the inner swirler outlet 140 by an axial distance along the axis 72.

Referring to FIG. 4, the nozzle guide 70 includes a nozzle guide base 146 (e.g., an annular plate) and a nozzle guide foot 148 (e.g., a bearing and/or slide member). The nozzle guide 70 extends radially between and to an inner side 150 of the nozzle guide 70 and an outer side 152 of the nozzle guide 70. The nozzle guide 70 and each of its members 146 and 148 extends circumferentially about (e.g., completely around) the axis 72. The nozzle guide 70 may thereby be configured with a full-hoop annular body.

The guide base 146 projects radially outward (e.g., away from the axis 72) from the guide foot 148 to the guide outer side 152; e.g., a radial outer distal end of the guide base 146. The guide base 146 extends axially along the axis 72 between and to opposing axial sides 138 and 154 of the guide base 146. The guide base 146 of FIG. 4 is disposed radially outboard of and circumscribes the guide foot 148.

The guide foot 148 is disposed at the guide inner side 150. An upstream portion 156 of the guide foot 148 may project axially out from the upstream axial side 154 of the guide base 146 to an upstream end 158 of the guide foot 148. This upstream portion 156 of the guide foot 148 may radially taper outward away from the axis 72 and the injector nozzle 108 as the upstream portion 156 of the guide foot 148 projects axially along the injector nozzle 108 to the foot upstream end 158. With this arrangement, the guide foot 148 is radially spaced from the injector nozzle 108 at the foot upstream end 158. In addition or alternatively, a downstream portion 160 of the guide foot 148 may project axially out from the downstream axial side 138 of the guide base 146 to a downstream end 162 of the guide foot 148. This downstream portion 160 of the guide foot 148 may radially taper inward towards the axis 72 and the injector nozzle 108 as the downstream portion 160 of the guide foot 148 projects axially along the injector nozzle 108 to the foot downstream end 162. With this arrangement, the guide foot 148 may be radially adjacent (or close to) the injector nozzle 108 at the foot downstream end 162. This arrangement also positions the downstream portion 160 of the guide foot 148 radially inward to provide room (e.g., clearance) for the first swirler wall 82.

The nozzle guide 70 is configured to couple the injector nozzle 108 to the air swirler structure 66 and, thus, the bulkhead 64 (see FIG. 2). The nozzle guide 70 and its guide base 146, for example, may project radially into the receptacle 84, where the nozzle guide 70 and its guide base 146 may be (e.g., loosely) captured axially between the first swirler wall 82 and the mounting plate 86. This capturing of the nozzle guide 70 between the first swirler wall 82 and the mounting plate 86 may facilitate the nozzle guide 70 and its guide base 146 to radially float (e.g., shift) within the receptacle 84. The nozzle guide 70 and its guide base 146, for example, may axially abut against, but slide radially from the axis 72 along the first swirler wall 82 and/or the mounting plate 86. This floating may in turn accommodate (e.g., slight) radial shifting between the air swirler structure 66 and the fuel injector 68 and its injector nozzle 108 during gas turbine engine operation.

Referring to FIG. 3, the injector nozzle 108 is mated with the nozzle guide 70. The injector nozzle 108, for example, projects axially through an inner bore of the guide foot 148. The guide foot 148 thereby extends axially along and circumscribes the injector nozzle 108. The guide foot 148 is configured to radially engage (e.g., contact) an outer cylindrical bearing surface 164 (e.g., a land surface) of the injector nozzle 108. The guide foot 148 is further configured to move (e.g., slide, translate, etc.) axially along the injector nozzle 108 and its bearing surface 164. This relative movement between the guide foot 148 and the injector nozzle 108 and its bearing surface 164 may in turn accommodate (e.g., slight) axial shifting between the air swirler structure 66 and the fuel injector 68 and its injector nozzle 108 during gas turbine engine operation.

During operation of the fuel injector assembly 62 of FIG. 3, air (e.g., the compressed core air from the HPC section 29B of FIG. 1) is directed into the air swirler passage 122. This air flows radially through the air swirler passage 122, longitudinally along the first swirler wall 82 and its flow guide surface 92 and is directed into the inner passage 134; e.g., a portion of the inner bore 136 downstream of the nozzle guide 70. As the air passes through the air swirler 112 and the air swirler passage 122, the stream of air is swirled in the first circumferential direction (see FIG. 6). The air stream directed through the air swirler 112 into the inner passage 134 is therefore (or otherwise includes) swirled air. This swirled air is then directed axially through the inner passage 134 and is discharged from the air swirler structure 66 through the inner swirler outlet 140.

As the swirled air flows along the first swirler wall 82, the first swirler wall 82 and its flow guide surface 92 guide the swirled air away from a corner (e.g., an interface / intersection) between the nozzle guide 70 and the injector nozzle 108. The first swirler wall 82 and its flow guide surface 92 may thereby facilitate a relatively smooth flow of the swirled air out of the air swirler passage 122 and into the inner passage 134. For example, the first swirler wall 82 may reduce flow separation at a swirler inlet. More particularly, by extending the first swirler wall 82 of FIG. 4 with its radial inner portion 102, the flow guide surface 92 may be extended along a contour of a flow field of the air swirler 112. Providing the radial inner portion 102 may also significantly reduce a size of a low pressure region forming at the corner between the nozzle guide 70 and the injector nozzle 108. By contrast, if the radial inner portion 102 of the first swirler wall 82 was omitted, the air may recirculate at the corner between the nozzle guide 70 and the injector nozzle 108 and create a relatively large low pressure region at the corner. This recirculating air may cause flow disturbances (e.g., turbulence) in a flow stream of the swirled air out of the air swirler passage 122 and into the inner passage 134. Such flow disturbances may cause downstream combustor instabilities.

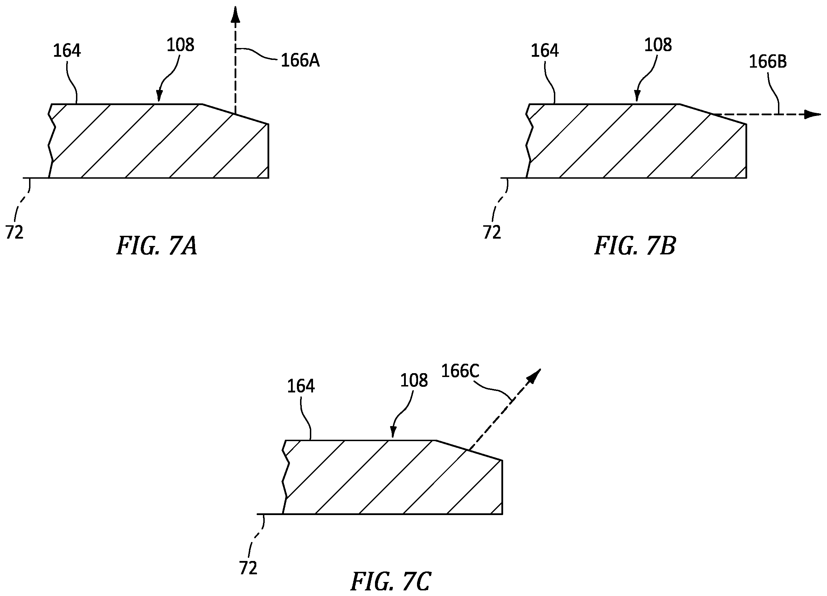

The fuel injected by the injector nozzle 108 for mixing with the swirled air may be a hydrocarbon fuel such as kerosene or jet fuel and/or a non-hydrocarbon fuel such as hydrogen fuel (e.g., H₂ gas). Referring to FIG. 7A, the fuel may be directed out of the injector nozzle 108 in a substantially radial direction (e.g., see line 166A) from one or more fuel nozzle outlets. Referring to FIG. 7B, the fuel may alternatively (or also) be directed out of the injector nozzle 108 in a substantially axial direction (e.g., see line 166B) from one or more fuel nozzle outlets. Referring to FIG. 7C, the fuel may alternatively (or also) be directed out of the injector nozzle 108 in a canted (e.g., axial and radial; diagonal) direction (e.g., see line 166C) from one or more fuel nozzle outlets. The present disclosure, however, is not limited to the foregoing exemplary injector nozzle configurations.

In some embodiments, referring to FIG. 4, the nozzle guide 70 may include one or more purge apertures 168 (one visible in FIG. 4) arranged circumferentially about the axis 72 in a circular array. Each purge aperture 168 is configured to purge (e.g., stagnant and/or recirculating) air out of a gap between the elements 70, 82 and 108. Each purge aperture 168 of FIG. 4, for example, extends across the guide base 146 (radially above the guide foot 148) from an inlet 170 into the respective purge aperture 168 to an outlet 172 from the respective purge aperture 168. The aperture inlet 170 is disposed in the upstream axial side 154. The aperture outlet 172 is disposed in the downstream axial side 138. The purge apertures 168 may be canted inward towards the bearing surface 164, or parallel to the bearing surface 164. In another example, the purge aperture 168 may be configured to generate (or not generate) swirl of the purge air. The present disclosure, however, is not limited to such an exemplary purge aperture arrangement.

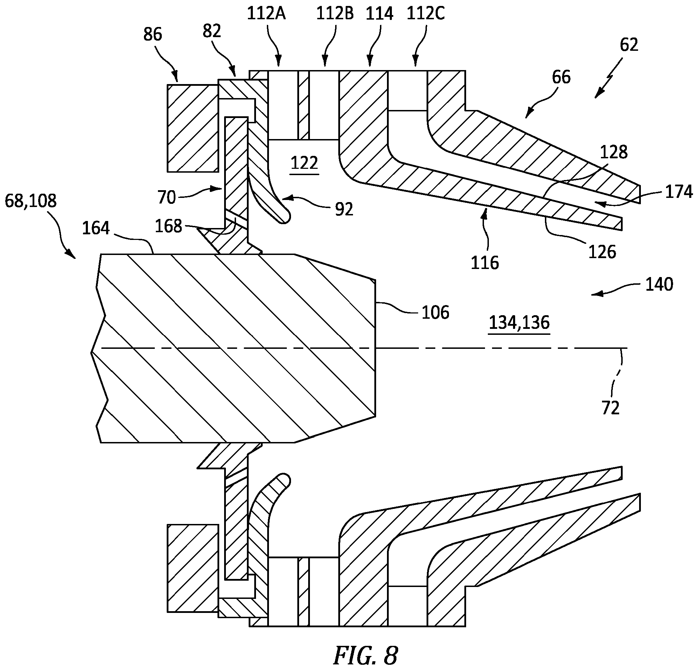

In some embodiments, referring to FIG. 3, the air swirler structure 66 may be configured with a single air swirler. In other embodiments, referring to FIG. 8, the air swirler may alternatively be one of a plurality of air swirlers 112A-C (generally referred to as "112"). In the embodiment of FIG. 8, the first air swirler 112A and the second air swirler 112B are each configured to direct (counter or co) swirled air radially into the inner bore 136 and its inner passage 134. The second air swirler 112B may be configured similar to the first air swirler 112A, except positioned axially downstream of the first air swirler 112A. The first air swirler 112A, for example, may be arranged axially between (a) the nozzle guide 70 / the first swirler wall 82 and (b) the second air swirler 112B. The first air swirler 112A may also be axially aligned with (e.g., axially overlap) the injector nozzle 108; e.g., axially arranged between (a) the nozzle guide 70 / the first swirler wall 82 and (b) the nozzle tip 106. The third air swirler 112C, on the other hand, may be configured to direct swirled air into an outer swirler passage 174 (e.g., an annulus within the air swirler structure 66) that circumscribes and extends along the swirler guide wall 116. This third air swirler 112C may swirl a third stream of air in the first circumferential direction (e.g., a common direction as the first air swirler 112A and/or the second air swirler 112B), or in the second circumferential direction about the axis 72 that is opposite the first circumferential direction. The present disclosure, however, is not limited to such an exemplary multi-air swirler configuration. For example, in other embodiments, the air swirler structure 66 may include one or more additional radial and/or axial flow air swirlers. In still other embodiments, the second air swirler 112B or the third air swirler 112C may be omitted to provided, for example, a dual air swirler arrangement.

The fuel injector assembly(ies) 62 may be included in various turbine engines other than the one described above. The fuel injector assembly(ies) 62, for example, may be included in a geared turbine engine where a geartrain connects one or more shafts to one or more rotors in a fan section, a compressor section and/or any other engine section. Alternatively, the fuel injector assembly(ies) 62 may be included in a direct drive turbine engine configured without a geartrain. The fuel injector assembly(ies) 62 may be included in a turbine engine configured with a single spool, with two spools (e.g., see FIG. 1), or with more than two spools. The turbine engine may be configured as a turbofan engine, a turbojet engine, a turboprop engine, a turboshaft engine, a propfan engine, a pusher fan engine or any other type of turbine engine. The turbine engine may alternatively be configured as an auxiliary power unit (APU) or an industrial gas turbine engine. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (62) for a turbine engine (20), comprising:
an air swirler structure (66) including a swirler wall (82), an inner passage (134) and an air swirler passage (122), the swirler wall (82) including a flow guide surface (92), at least an inner portion (110) of the flow guide surface (92) having a frustoconical geometry, the inner passage (134) extending axially along an axis (72) within the air swirler structure (66) to a swirler outlet (140), and the air swirler passage (122) extending radially into the air swirler structure (66), longitudinally along the flow guide surface (92) and to the inner passage (134);
an injector nozzle (108) projecting axially into the inner passage (134); and
a nozzle guide (70) coupling the injector nozzle (108) to the air swirler structure (66), the nozzle guide (70) axially abutted against the swirler wall (82),
wherein the swirler wall (82) extends along a centerline (94) to a distal inner end (96) of the swirler wall (82), and
the centerline (94) has a trajectory extending towards a tip (106) of the injector nozzle (108);
**characterized in that**
an outer portion (100) of the flow guide surface (92) is perpendicular to the axis (72).

2. The assembly of claim 1, wherein the nozzle guide (70) is slidable along the swirler wall (82).

3. The assembly of claim 1 or 2, wherein:
the air swirler structure (66) further includes a mounting plate (86) connected to the swirler wall (82); and
an outer portion (152) of the nozzle guide (70) is received within a receptacle (84) formed by and axially between the swirler wall (82) and the mounting plate (86).

4. The assembly of any preceding claim, wherein the nozzle guide (70) is radially abutted against the injector nozzle (108).

5. The assembly of any preceding claim, wherein the nozzle guide (70) circumscribes and is slidable axially along the injector nozzle (108).

6. The assembly of any preceding claim, wherein at least a portion of the frustoconical geometry follows a straight line trajectory in a reference plane parallel with the axis (72).

7. The assembly of any preceding claim, wherein at least a portion of the frustoconical geometry follows a curved trajectory in a reference plane parallel with the axis (72).

8. The assembly of any preceding claim, wherein:
the swirler wall (82) is a first swirler wall (82), and the air swirler structure (66) further includes a second swirler wall (114) and a plurality of swirler vanes (118);
the air swirler passage (122) is formed by and is axially between the first swirler wall (82) and the second swirler wall (114); and
each of the plurality of swirler vanes (118) extends axially across the air swirler passage (122) from the first swirler wall (82) to the second swirler wall (114).

9. The assembly of claim 8, wherein:
the plurality of swirler vanes (118) are connected to a radially outer portion (98) of the first swirler wall (82); and
a radially inner portion (102) of the first swirler wall (82) includes the inner portion (110) of the flow guide surface (92) having the frustoconical geometry.

10. The assembly of any preceding claim, wherein an outer portion (100) of the flow guide surface (92) has a planar geometry.

11. The assembly of any preceding claim, wherein a purge aperture (168) extends axially across the nozzle guide (70).

12. The assembly of any preceding claim, wherein:
the nozzle guide (70) includes a foot (148) that radially engages the injector nozzle (108);
and
a first portion of the foot (148) radially tapers towards the injector nozzle (108) as the first portion of the foot (148) projects axially into the inner passage (134) along the injector nozzle (108).

13. The assembly of any preceding claim, wherein:
the air swirler passage (122) is a first air swirler passage, and the air swirler structure (66) further includes a second air swirler passage;
the first air swirler passage (122) is axially between the second air swirler passage and the swirler wall (82); and
the second air swirler passage extends radially into the air swirler structure (66) towards and is fluidly coupled with the inner passage (134).

14. The assembly of any of claims 1 to 12, wherein:
the air swirler passage (122) is a first air swirler passage (122), and the air swirler structure (66) further includes an annulus and a second air swirler passage (174);
the annulus is radially outboard from the inner passage (134), and the annulus extends circumferentially about and axially along the inner passage (134); and
the second air swirler passage (174) extends radially into the air swirler structure (66) to the annulus.

## Patentansprüche

1. Baugruppe (62) für ein Turbinentriebwerk (20), umfassend:
eine Luftverwirblerstruktur (66) einschließlich einer Verwirblerwand (82), eines inneren Durchgangs (134) und eines Luftverwirblerdurchgangs (122), wobei die Verwirblerwand (82) eine Strömungsleitfläche (92) einschließt, wobei mindestens ein innerer Abschnitt (110) der Strömungsleitfläche (92) eine kegelstumpfförmige Geometrie aufweist, wobei sich der innere Durchgang (134) axial entlang einer Achse (72) innerhalb der Luftverwirblerstruktur (66) zu einem Verwirblerauslass (140) erstreckt und sich der Luftverwirblerdurchgang (122) radial in die Luftverwirblerstruktur (66) hinein, in Längsrichtung entlang der Strömungsleitfläche (92) und zum inneren Durchgang (134) erstreckt;
eine Injektordüse (108), die axial in den inneren Durchgang (134) hineinragt; und
eine Düsenführung (70), die die Injektordüse (108) mit der Luftverwirblerstruktur (66) koppelt, wobei die Düsenführung (70) axial an der Verwirblerwand (82) anliegt,
wobei sich die Verwirblerwand (82) entlang einer Mittellinie (94) bis zu einem distalen inneren Ende (96) der Verwirblerwand (82) erstreckt, und
die Mittellinie (94) einen Verlauf aufweist, der sich in Richtung einer Spitze (106) der Injektordüse (108) erstreckt;
**dadurch gekennzeichnet, dass**
ein äußerer Abschnitt (100) der Strömungsleitfläche (92) senkrecht zur Achse (72) steht.

2. Baugruppe nach Anspruch 1, wobei die Düsenführung (70) entlang der Verwirblerwand (82) verschiebbar ist.

3. Baugruppe nach Anspruch 1 oder 2, wobei:
die Luftverwirblerstruktur (66) ferner eine Montageplatte (86) einschließt, die mit der Verwirblerwand (82) verbunden ist; und ein äußerer Abschnitt (152) der Düsenführung (70) in einem Behälter (84) aufgenommen ist, der durch die Verwirblerwand (82) und die Montageplatte (86) ausgebildet wird und sich axial zwischen diesen befindet.

4. Baugruppe nach einem der vorhergehenden Ansprüche, wobei die Düsenführung (70) radial an der Injektordüse (108) anliegt.

5. Baugruppe nach einem der vorhergehenden Ansprüche, wobei die Düsenführung (70) die Injektordüse (108) umgibt und axial entlang dieser verschiebbar ist.

6. Baugruppe nach einem der vorhergehenden Ansprüche, wobei mindestens ein Abschnitt der kegelstumpfförmigen Geometrie einem geradlinigen Verlauf in einer zur Achse (72) parallelen Bezugsebene folgt.

7. Baugruppe nach einem der vorhergehenden Ansprüche, wobei mindestens ein Abschnitt der kegelstumpfförmigen Geometrie einem gekrümmten Verlauf in einer zur Achse (72) parallelen Bezugsebene folgt.

8. Baugruppe nach einem der vorhergehenden Ansprüche, wobei:
die Verwirblerwand (82) eine erste Verwirblerwand (82) ist und die Luftverwirblerstruktur (66) ferner eine zweite Verwirblerwand (114) und eine Vielzahl von Verwirblerschaufeln (118) einschließt;
der Luftverwirblerdurchgang (122) durch die erste Verwirblerwand (82) und die zweite Verwirblerwand (114) gebildet wird und sich axial zwischen diesen befindet; und
sich jede der Vielzahl von Verwirblerschaufeln (118) axial über den Luftverwirblerdurchgang (122) von der ersten Verwirblerwand (82) bis zur zweiten Verwirblerwand (114) erstreckt.

9. Baugruppe nach Anspruch 8, wobei:
die Vielzahl von Verwirblerschaufeln (118) mit einem radialen äußeren Abschnitt (98) der ersten Verwirblerwand (82) verbunden ist; und
ein radialer innerer Abschnitt (102) der ersten Verwirblerwand (82) den inneren Abschnitt (110) der Strömungsleitfläche (92) mit der kegelstumpfförmigen Geometrie einschließt.

10. Baugruppe nach einem der vorhergehenden Ansprüche, wobei ein äußerer Abschnitt (100) der Strömungsleitfläche (92) eine planare Geometrie aufweist.

11. Baugruppe nach einem der vorhergehenden Ansprüche, wobei sich eine Spülöffnung (168) axial über die Düsenführung (70) erstreckt.

12. Baugruppe nach einem der vorhergehenden Ansprüche, wobei:
die Düsenführung (70) einen Fuß (148) einschließt, der radial in Eingriff mit der Injektordüse (108) eingestellt ist; und
ein erster Abschnitt des Fußes (148) sich radial in Richtung der Injektordüse (108) verjüngt, während der erste Abschnitt des Fußes (148) axial in den inneren Durchgang (134) entlang der Injektordüse (108) hineinragt.

13. Baugruppe nach einem der vorhergehenden Ansprüche, wobei:
der Luftverwirblerdurchgang (122) ein erster Luftverwirblerdurchgang ist und die Luftverwirblerstruktur (66) ferner einen zweiten Luftverwirblerdurchgang einschließt;
sich der erste Luftverwirblerdurchgang (122) axial zwischen dem zweiten Luftverwirblerdurchgang und der Verwirblerwand (82) befindet; und
sich der zweite Luftverwirblerdurchgang radial in die Luftverwirblerstruktur (66) hinein erstreckt und mit dem inneren Durchgang (134) fluidmäßig gekoppelt ist.

14. Baugruppe nach einem der Ansprüche 1 bis 12, wobei:
der Luftverwirblerdurchgang (122) ein erster Luftverwirblerdurchgang (122) ist und die Luftverwirblerstruktur (66) ferner einen Ringraum und einen zweiten Luftverwirblerdurchgang (174) einschließt;
der Ringraum radial außerhalb des inneren Durchgangs (134) ist und sich der Ringraum umlaufend um den inneren Durchgang (134) und in axialer Richtung entlang diesem erstreckt; und
der zweite Luftverwirblerdurchgang (174) sich radial in die Luftverwirblerstruktur (66) bis zum Ringraum erstreckt.

## Revendications

1. Ensemble (62) pour un moteur à turbine (20), comprenant :
une structure de coupelle de turbulence d'air (66) comportant une paroi de coupelle de turbulence (82), un passage interne (134) et un passage de coupelle de turbulence d'air (122), la paroi de coupelle de turbulence (82) comportant une surface de guidage d'écoulement (92), au moins une partie interne (110) de la surface de guidage d'écoulement (92) présentant une géométrie tronconique, le passage interne (134) s'étendant axialement le long d'un axe (72) à l'intérieur de la structure de coupelle de turbulence d'air (66) vers une sortie de coupelle de turbulence (140), et le passage de coupelle de turbulence d'air (122) s'étendant radialement dans la structure de coupelle de turbulence d'air (66), longitudinalement le long de la surface de guidage d'écoulement (92) et vers le passage interne (134) ;
une tuyère d'injection (108) faisant saillie axialement dans le passage interne (134) ; et
un guide de tuyère (70) accouplant la tuyère d'injection (108) à la structure de coupelle de turbulence d'air (66), le guide de tuyère (70) venant axialement en butée contre la paroi de coupelle de turbulence (82),
dans lequel la paroi de coupelle de turbulence (82) s'étend le long d'un axe longitudinal (94) vers une extrémité interne distale (96) de la paroi de coupelle de turbulence (82), et
l'axe longitudinal (94) présente une trajectoire qui s'étend vers une pointe (106) de la tuyère d'injection (108) ;
**caractérisé en ce que**
une partie externe (100) de la surface de guidage d'écoulement (92) est perpendiculaire à l'axe (72).

2. Ensemble selon la revendication 1, dans lequel le guide de tuyère (70) peut coulisser le long de la paroi de coupelle de turbulence (82).

3. Ensemble selon la revendication 1 ou 2, dans lequel :
la structure de coupelle de turbulence d'air (66) comporte en outre une plaque de montage (86) reliée à la paroi de coupelle de turbulence (82) ; et
une partie externe (152) du guide de tuyère (70) est reçue à l'intérieur d'un logement (84) formé par et étant situé axialement entre la paroi de coupelle de turbulence (82) et la plaque de montage (86).

4. Ensemble selon l'une quelconque revendication précédente, dans lequel le guide de tuyère (70) vient radialement en butée contre la tuyère d'injection (108).

5. Ensemble selon l'une quelconque revendication précédente, dans lequel le guide de tuyère (70) entoure et peut coulisser axialement le long de la tuyère d'injection (108).

6. Ensemble selon l'une quelconque revendication précédente, dans lequel au moins une partie de la géométrie tronconique suit une trajectoire en ligne droite dans un plan de référence parallèle à l'axe (72).

7. Ensemble selon l'une quelconque revendication précédente, dans lequel au moins une partie de la géométrie tronconique suit une trajectoire courbe dans un plan de référence parallèle à l'axe (72).

8. Ensemble selon l'une quelconque revendication précédente, dans lequel :
la paroi de coupelle de turbulence (82) est une première paroi de coupelle de turbulence (82), et la structure de coupelle de turbulence d'air (66) comporte en outre une seconde paroi de coupelle de turbulence (114) et une pluralité d'aubes de coupelle de turbulence (118) ;
le passage de coupelle de turbulence d'air (122) est formé par et est situé axialement entre la première paroi de coupelle de turbulence (82) et la seconde paroi de coupelle de turbulence (114) ; et
chacune de la pluralité d'aubes de coupelle de turbulence (118) s'étend axialement à travers le passage de coupelle de turbulence d'air (122) à partir de la première paroi de coupelle de turbulence (82) vers la seconde paroi de coupelle de turbulence (114).

9. Ensemble selon la revendication 8, dans lequel :
la pluralité d'aubes de coupelle de turbulence (118) sont reliées à une partie radialement externe (98) de la première paroi de coupelle de turbulence (82) ; et
une partie radialement interne (102) de la première paroi de coupelle de turbulence (82) comporte la partie interne (110) de la surface de guidage d'écoulement (92) présentant la géométrie tronconique.

10. Ensemble selon l'une quelconque revendication précédente, dans lequel une partie externe (100) de la surface de guidage d'écoulement (92) présente une géométrie plane.

11. Ensemble selon l'une quelconque revendication précédente, dans lequel une ouverture de purge (168) s'étend axialement à travers le guide de tuyère (70).

12. Ensemble selon l'une quelconque revendication précédente, dans lequel :
le guide de tuyère (70) comporte un pied (148) qui vient radialement en prise avec la tuyère d'injection (108) ; et
une première partie du pied (148) se rétrécit radialement vers la tuyère d'injection (108) tandis que la première partie du pied (148) fait saillie axialement dans le passage interne (134) le long de la tuyère d'injection (108).

13. Ensemble selon l'une quelconque revendication précédente, dans lequel :
le passage de coupelle de turbulence d'air (122) est un premier passage de coupelle de turbulence d'air, et la structure de coupelle de turbulence d'air (66) comporte en outre un second passage de coupelle de turbulence d'air ;
le premier passage de coupelle de turbulence d'air (122) est situé axialement entre le second passage de coupelle de turbulence d'air et la paroi de coupelle de turbulence (82) ;
et
le second passage de coupelle de turbulence d'air s'étend radialement dans la structure de coupelle de turbulence d'air (66) vers et est accouplé fluidiquement avec le passage interne (134).

14. Ensemble selon l'une quelconque des revendications 1 à 12, dans lequel :
le passage de coupelle de turbulence d'air (122) est un premier passage de coupelle de turbulence d'air (122), et la structure de coupelle de turbulence d'air (66) comporte en outre un anneau et un second passage de coupelle de turbulence d'air (174) ;
l'anneau est situé radialement à l'extérieur du passage interne (134), et l'anneau s'étend circonférentiellement autour et axialement le long du passage interne (134) ; et
le second passage de coupelle de turbulence d'air (174) s'étend radialement dans la structure de coupelle de turbulence d'air (66) vers l'anneau.
